# EUROPEAN PATENT APPLICATION

(11) **EP 2 952 987 A1**
(43) Date of publication of application: **09.12.2015**
(21) Application number: 13873172.4
(22) Date of filing: 01.11.2013
(51) Int. Cl.: G05B 19/05, H03M 1/12, H03M 1/18

(54) **CONTROLLER**

(30) Priority: 29.01.2013 JP 2013014386
(71) Applicant: Yanmar Co., Ltd., Osaka-shi, Osaka 530-8311 (JP)
(72) Inventor: NOBUHARA, Tomoko, Osaka-shi Osaka 531-0076 (JP); IKEDA, Takayuki, Osaka-shi Osaka 531-0076 (JP); KANAYA, Yoshihisa, Osaka-shi Osaka 531-0076 (JP)
(74) Representative: Boult Wade Tennant
(86) International application number: PCT/JP2013/079777
(87) International publication number: WO 2014/119075

(57) **Abstract**

A controller receives a voltage signal as an input signal. A first resistor (21) is provided in a positive electrode side path (51) and a second resistor (22) is provided to connect on the path (53) between the positive electrode side path (51) and a negative electrode side path (52). The first resistor (21) and the second resistor (22) act as voltage dividing resistors, the voltage of the voltage signal is reduced in half and the reduced voltage signal is input to a microcomputer (10). Reading maps for voltage signal corresponding to ratio between the assumed input maximum voltage and the reduced input voltage for each input voltage pattern are preliminarily stored in the microcomputer (10). The maps are selected by a first changeover switch (13) and a second changeover switch (14) of the microcomputer (10).

## Description

### Technical Field

The present invention relates to a controller which receives an input signal from a measuring instrument as an example.

### Background Art

As a conventional controller, there is a controller disclosed in JP-A-2002-159194 (Patent Literature 1). The controller is configured to be capable to accept a rotational speed command of any system in a serial communication system, PWM system, and an analog system.

### Citation List

### Patent Literature

PLT 1: JP 2002-159194 A

### Summary of Invention

### Technical Problem

However, a correspondence in a case that analog signals in various patterns, such as a range of 0V∼5V, 1V∼5V, 4mA∼20mA, or 0V∼10V, are input to the above-mentioned conventional controller is not disclosed.

An object of the present invention is to provide a controller which can correspond to the analog input in a plurality of patterns.

### Solution to Problem

In order to achieve the object, a controller of the present invention, which receives a voltage signal as an input signal includes:
a first resistor provided on a positive electrode side path;
a second resistor provided to connect between the positive electrode side path and a negative electrode side path, and the first resistor and the second resistor reduce an assumed input maximum voltage to be an allowable upper limit voltage of the controller or below; and
a selection unit which prepares a reading map for a voltage signal corresponding to ratio between the assumed input maximum voltage and the reduced voltage for each input voltage pattern, and selects a map corresponding to the input voltage pattern.

According to the above-mentioned configuration of the controller, the assumed input maximum voltage is reduced to an allowable upper limit voltage of the controller or below by the first resistor and the second resistor, and the selection unit prepares a reading map for the voltage signal corresponding to ratio between the assumed input maximum voltage and the reduced input voltage for each input voltage pattern, and selects a map corresponding to the input voltage pattern. Therefore, an input voltage can be controlled to be the allowable upper limit voltage of the controller or below and a plurality of input signal patterns can be responded by using the reading map for the voltage signal.

### Advantageous Effects of Invention

According to the controller of the present invention, an input voltage can be controlled to an allowable upper limit voltage of the controller or below and a plurality of input signal patterns can be responded.

### Brief Description of Drawings

Fig. 1 is a schematic diagram illustrating a controller of an embodiment of the present invention.
Fig. 2 is a diagram illustrating a map corresponding to an input voltage pattern of the controller.
Fig. 3 is a diagram for explaining a configuration of a changeover switch for setting maps corresponding to the input voltage pattern of the controller.

### Description of Embodiments

The present invention will be described in detail by embodiments illustrated in the drawings.

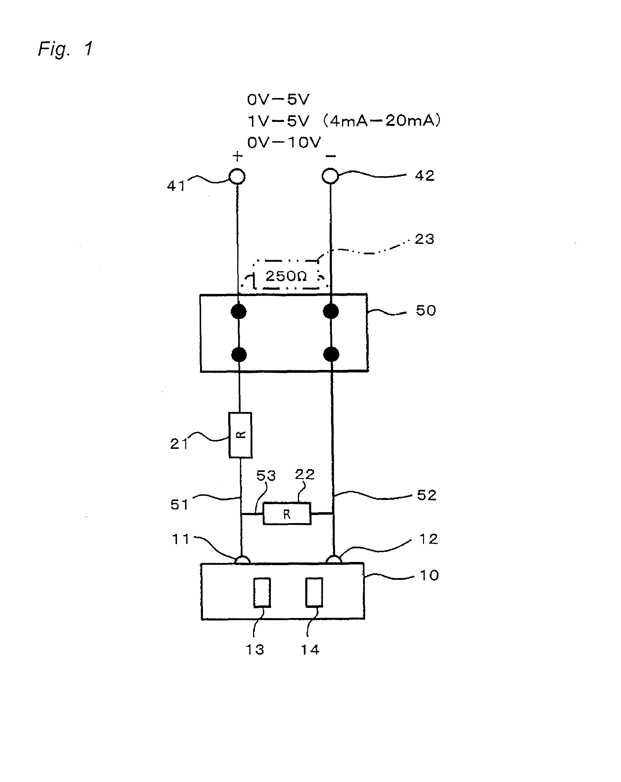

Fig. 1 is a schematic diagram illustrating a controller of an embodiment of the present invention.

As shown in Fig. 1, the controller receives a voltage signal in a range of 0-5 V, 1-5 V or 0-10 V as an input signals. The controller has a first resistor 21, a second resistor 22, and a microcomputer 10 having input terminals 11, 12.

The input terminal 11 is electrically connected to a positive electrode 41 through a positive electrode side path (harness) 51 and a terminal plate 50. The first resistor 21 is provided on the positive electrode side path 51.

The input terminal 12 is electrically connected to a negative electrode 42 through a negative electrode side path (harness) 52 and the terminal plate 50.

The negative electrode side path 52 is electrically connected to the positive electrode side path 51 between the first resistor 21 and the input terminal 11 through a path (harness) 53. The second resistor 22 is provided to connect the path 53, that is, between the positive electrode side path 51 and the negative electrode side path 52.

A temperature detection element which detects temperature and outputs the detected temperature as a voltage signal is electrically connected to the positive electrode 41 and negative electrode 42. Specifically, the voltage signal includes an analog signal of an input voltage pattern in a range of 0-5 V, 1-5 V or 0-10 V.

A temperature detection element which detects temperature and outputs the detected temperature as a current signal also may be electrically connected to the positive electrode 41 and negative electrode 42. Specifically, the current signal includes an analog signal of an input current pattern in a range of 4-20 mA.

In a case that the temperature detection element outputs an analog signal of an input current pattern, a resistor 23 having the resistance value 250 Ω is electrically connected to the positive electrode side path 51 and the negative electrode side path 52 on the terminal plate 50 by an installation worker and so on. An input current pattern in a range of 4-20 mA is converted into an input voltage pattern in a range of 1-5 V by the resistor 23. In a case that a temperature detection element which outputs an analog signal of an input voltage pattern in a range of 0-5 V, 1-5 V or 0-10 V is used, the resistor 23 is unnecessary.

The resistance value of the first resistor 21 is same as the resistance value of the second resistor 22. The input terminal 12 is grounded. Therefore, the first resistor 21 and the second resistor 22 act as voltage dividing resistors. Thus, the voltage of the voltage signal is reduced in half and the reduced voltage signal is input to the microcomputer 10.

Specifically, if 10 V as an assumed input maximum voltage out of the input voltage pattern in the range of 0-5 V, 1-5 V, or 0-10 V is input to the controller, 5 V reduced by the first resistor 21 and the second resistor 22 is input to the microcomputer 10. Therefore, in a case that an allowable upper limit voltage of the microcomputer 10 is 5 V, the input voltage to the microcomputer 10 can be controlled to be an allowable upper limit voltage of the microcomputer 10 or below.

The microcomputer 10 has a first changeover switch 13 and a second changeover switch 14 as an example of the selection unit. Each of the first changeover switch 13 and the second changeover switch 14 is configured by a dip switch capable of switching between the on state and the off state.

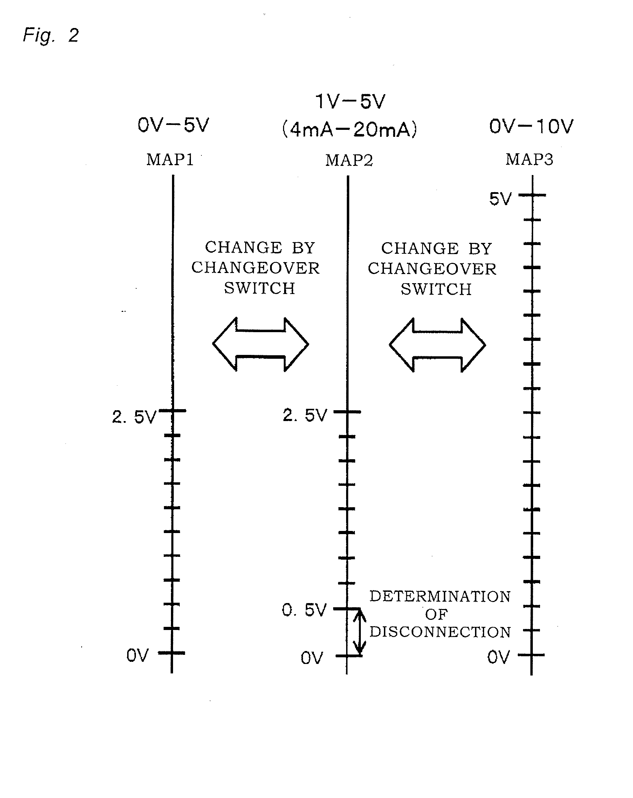

The microcomputer 10 has a CPU (Central Processing Unit) and a memory. Software and maps 1-3 (shown in Fig. 2) for converting a voltage signal into temperature are preliminarily stored in the memory.

The maps 1-3 correspond to a part of a table showing a correspondence relation between the input voltage pattern that the input voltage pattern in a range of 0-5 V, 1-5 V or 0-10 V is reduced by the first resistor 21 and the second resistor 22 and the temperature detected by the temperature detection element. In other words, the maps 1-3 are reading maps corresponding to ratio between a voltage of the input voltage pattern in a range of 0-5 V, 1-5 V or 0-10 V and a voltage of the input voltage pattern reduced by the first resistor 21 and the second resistor 22.

Fig. 2 shows the maps 1-3 corresponding to the input voltage pattern in a range of 0-5 V, 1-5 V or 0-10 V.

In a case that a temperature detection element outputs an analog signal of the input voltage pattern in the range of 0-5 V is used, the map 1 shown in the left side of Fig. 2 is used. The map 1 corresponds to the input voltage pattern in a range of 0-2.5 V that the input voltage pattern in the range of 0-5 V is reduced in half by the first resistor 21 and the second resistor 22. In the map 1, scales are notched every 0.25 V from 0 V to 2.5 V.

For example, in a case that a temperature detection element having a detection range from -50 °C to 50 °C, the CPU calculates and converts an input voltage into temperature with the software so that an input voltage 0 V corresponds to -50 °C, an input voltage 2.5 V corresponds to 50 °C and one scale unit corresponds to 10 °C.

When a temperature detection element which outputs an analog signal of an input voltage pattern in a range of 1-5 V is used, the map 2 shown in the middle of Fig. 2 is used. Scales of the map 2 corresponds to an input voltage pattern in a range of 0.5-2.5 V that the input voltage pattern in the range of 1-5 V is reduced in half by the first resistor 21 and the second resistor 22. In a case that the temperature detection element outputs an analog signal of an input current pattern, an input voltage pattern in the range of 1-5 V is formed by the resistor 23. In that case, the map 2 is used.

In a case that the map 2 is used, if the input voltage to the microcomputer 10 is lower than 0.5 V, disconnection of the positive electrode side path 51 or the negative electrode side path 52 can be determined by the CPU.

In a case that a temperature detection element outputs an analog signal of an input voltage pattern in the range of 0-10 V is used, the map 3 shown in the right side of Fig. 2 is used. Scales of the map 3 corresponds to the input voltage pattern in a range of 0-5 V that the input voltage pattern in a range of 0-10 V is reduced in half by the first resistor 21 and the second resistor 22.

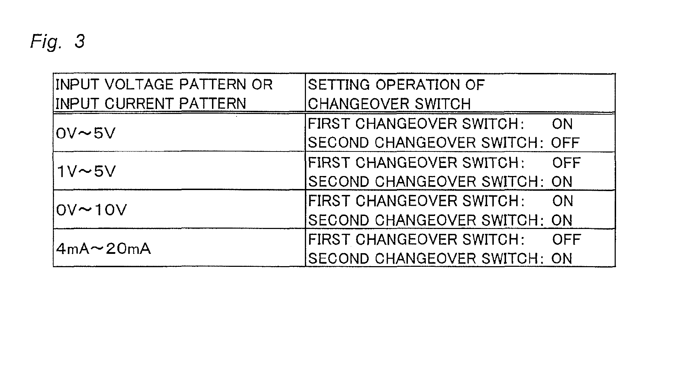

Fig. 3 shows a setting operation of the first changeover switch 13 and the second changeover switch 14 for setting the maps 1-3 corresponding to the input voltage pattern or the input current pattern input to the microcomputer 10.

As shown in Fig. 3, in a case that the input voltage pattern in a range of 0-5 V is output to the microcomputer 10, the first changeover switch 13 is set to the on state, the second changeover switch 14 is set to the off state, and the map 1 is selected by an installation worker.

In a case that the input voltage pattern in a range of 1-5 V or the input current pattern in a range of 4-20 mA is output to the microcomputer 10, the first changeover switch 13 is set to the off state, the second changeover switch 14 is set to the on state, and the map 2 is selected by an installation worker.

In a case that the input voltage pattern in a range of 0-10 V is output to the microcomputer 10, the first changeover switch 13 and the second changeover switch 14 are set to the on state and the map 3 is selected by an installation worker.

As described above, the maps 1-3 can be selected properly and a plurality of input systems can be responded by setting the first changeover switch 13 and the second changeover switch 14 to the on state or the off state by an installation worker corresponding to the input voltage pattern or the input current pattern.

In addition, the present invention is not limited to the above-mentioned embodiment. For example, in the embodiment, although the resistance of the first resistor 21 is same as the resistance of the second resistor 22, the resistance of the first resistor and the second resistor may be optionally changed so that the resistance of the first resistor is different from the resistance of the second resistor. As a result, the voltage of the voltage signal can be reduced to a desired voltage such as one-third or one-fourth of the voltage signal.

Although the temperature detection element is electrically connected to the microcomputer 10, other measuring instrument such as a pressure detection element may be electrically connected to a microcomputer.

### Reference Signs List

- 10:: Microcomputer
- 13:: First changeover switch
- 14:: Second changeover switch
- 21:: First resistor
- 22:: Second resistor
- 51:: Positive electrode side path
- 52:: Negative electrode side path

## Claims

1. A controller, which receives a voltage signal as an input signal, includes:
a first resistor provided on a positive electrode side path;
a second resistor provided to connect between the positive electrode side path and a negative electrode side path, and the first resistor and the second resistor reduce an assumed input maximum voltage to be an allowable upper limit voltage of the controller or below; and
a selection unit which prepares a reading map for a voltage signal corresponding to ratio between the assumed input maximum voltage and the reduced voltage for each input voltage pattern, and selects a map corresponding to the input voltage pattern.
